# FASCICULE DE BREVET EUROPEEN

(11) **EP 3 017 690 B1**
(45) Date de publication et mention de la délivrance du brevet: **16.08.2023**
(21) Numéro de dépôt: 15306784.8
(22) Date de dépôt: 10.11.2015
(51) Int. Cl.: A01K 1/00, A01K 1/02

(54) **DISPOSITIF DE CLOISONNEMENT POUR ANIMAUX, EN PARTICULIER POUR DES VEAUX**
STALL FÜR TIERE, INSBESONDERE KÄLBER
SHELTER FOR ANIMALS, IN PARTICULAR FOR CALVES

(30) Priorité: 10.11.2014 FR 1460865
(43) Date de publication de la demande: 11.05.2016
(73) Titulaire: Polymoule, 72550 Coulans sur Gee (FR)
(72) Inventeur: COSNET, Gilbert, 72550 Degre (FR)
(74) Mandataire: Jacobacci Coralis Harle

(56) Documents cités:
- WO-A1-2009/089617
- BE-A2- 900 786
- CA-A1- 1 182 005
- DE-C- 292 474
- FR-A- 1 305 408
- GB-A- 839 177

## Description

### DOMAINE TECHNIQUE AUQUEL SE RAPPORTE L'INVENTION

La présente invention concerne un dispositif de cloisonnement pour animaux, en particulier pour des veaux, lequel dispositif se présente sous une forme générale parallélépipédique comprenant un côté avant, un côté arrière, deux côtés latéraux et un fond.

### ARRIERE-PLAN TECHNOLOGIQUE

De manière classique, dans le cadre de leur élevage, certains animaux sont parqués dans des dispositifs de cloisonnement individuels ou collectifs aménagés à l'intérieur d'un bâtiment, qui ont une forme générale parallélépipédique comprenant quatre côtés et un fond (constitué généralement par le sol du bâtiment revêtu d'un paillage, ou par un plancher/caillebotis rapporté).

De tels dispositifs de cloisonnement sont par exemple utilisés pour l'élevage des porcs (voir par exemple FR-1 305 408).

Il existe également des dispositifs de cloisonnement du même genre (couramment appelés « cases ») pour élever des veaux, depuis leur naissance jusqu'à un âge de l'ordre de 8 semaines.

Certaines de ces cases à veaux sont constituées d'un assemblage de parois métalliques barreaudées associées à un plancher/caillebotis en bois ou en matière plastique.

Une réalisation connue, décrite dans le document FR-2 990 103, propose deux parois latérales en matière plastique associées à un portillon avant et à une paroi arrière, avec un plancher/caillebotis dont l'une des bordures est montée pivotante sur l'une des parois latérales, pour pouvoir être rabattue contre cette paroi.

On connait encore d'autres dispositifs de cloisonnement, par exemple décrits dans les documents DE-292 474, CA-1 182 005, GB-839 177, WO-2009 089617 ou encore BE-900 786.

Mais la structure des dispositifs de cloisonnement actuels ne permet pas leur démontage aisé ; de ce fait, leurs différentes parties constitutives ne peuvent pas être nettoyées facilement.
D'autre part, leur structure ne permet pas de leur conférer aisément différentes configurations, notamment ne permet pas de réaliser à volonté des cases collectives à partir d'éléments constitutifs des cases individuelles, tout en respectant les normes dimensionnelles d'élevage des veaux, ni de réaliser à volonté et facilement des cases avec ou sans plancher/caillebotis.
De ce fait, les caractéristiques de polyvalence de leurs éléments constitutifs sont limitées.

### OBJET DE L'INVENTION

La présente invention selon la revendication 1 vise à remédier à ces inconvénients

Pour cela, le dispositif de cloisonnement pour animaux conforme à la présente invention est de forme générale parallélépipédique comprenant un côté avant, un côté arrière, deux côtés latéraux et un fond,
- lequel côté avant comprend au moins deux poteaux comportant chacun, sur deux de leurs côtés opposés, des moyens adaptés pour la fixation d'une bordure latérale d'une paroi avant, laquelle paroi avant comporte une bordure inférieure,
- lequel côté arrière comprend au moins deux poteaux comportant chacun, sur deux de leurs côtés opposés, des moyens adaptés pour la fixation d'une bordure latérale d'une paroi arrière, laquelle paroi arrière comporte une bordure inférieure,

et lesdits poteaux desdits côtés avant et arrière comportant des moyens en forme de gorge d'encastrement pour la fixation d'une bordure latérale d'une paroi latérale, pour constituer lesdits côtés latéraux, lesquelles parois latérales comportent une bordure inférieure, et lesquelles gorges d'encastrement sont ménagées sur toute ou pratiquement toute la hauteur desdits poteaux, adaptées pour le montage et la tenue desdites parois latérales par simple coulissement,
lequel dispositif de cloisonnement a la possibilité de comprendre un fond formé au moins en partie d'un système de plancher/caillebotis comportant une structure de plancher/caillebotis ou plusieurs structures de plancher/caillebotis juxtaposées, chacune desdites structures de plancher/caillebotis comportant une face inférieure, une face supérieure, deux côtés d'extrémités et deux côtés latéraux ;
et selon la présente invention, lesdits poteaux sont munis d'une gorge d'encastrement traversante, fermée en partie supérieure, la partie inférieure desdits poteaux comportant un socle pour leur fixation au sol au moyen de vis,
ladite gorge est adaptée pour permettre le positionnement desdites parois latérales par encastrement, avec une partie de chaque côté dudit poteau, pour former une extension avant, de part et d'autre de ladite ou desdites parois avant,
en outre, lesdits poteaux comportent des moyens pour le montage et la tenue de ladite paroi avant, et/ou de ladite paroi arrière, et/ou desdits parois latérales, sur au moins deux niveaux d'indexation en hauteur, de manière adaptée pour permettre :
   - leur positionnement bas, avec leur bordure inférieure à proximité du sol, ou en appui contre celui-ci, dans le cas où ledit fond est réalisé par le sol, et
   - leur positionnement haut, avec leur bordure inférieure à distance du sol, au niveau ou pratiquement au niveau de la face supérieure de ladite structure de plancher/caillebotis rapportée constituant ledit fond.

Les parois latérales sont maintenues dans la gorge d'encastrement des poteaux sans moyen de fixation complémentaire (type vis, boulons ou autres ...), ce qui permet leur montage et leur démontage aisés, sans nécessiter d'outillage particulier. De plus, le niveau de hauteur de ces parois latérales peut être adapté notamment selon la présence ou non d'une structure de plancher/caillebotis, tout comme le niveau de hauteur des parois avant et arrière.

Une telle combinaison structurelle permet aussi d'adapter à volonté la dimension du dispositif de cloisonnement, à partir d'éléments de parois et de poteaux identiques.

Lesdites parois latérales et/ou lesdits poteaux comportent alors avantageusement des moyens de réglage de hauteur autorisant un positionnement de chaque paroi latérale sur au moins deux niveaux d'indexation en hauteur dans la gorge d'encastrement traversante du poteau associé.

Ces moyens de réglage de hauteur consistent de préférence en des systèmes de rainure(s)/nervure(s) complémentaires, formant butée(s), ménagées dans ladite gorge traversante et sur lesdites parois latérales.

Dans une forme de réalisation particulière, notamment pour permettre la réalisation de dispositifs de cloisonnement collectifs ou de surface plus importante, lesdits côtés avant et arrière, et/ou lesdits côtés latéraux, comportent plus de deux poteaux identiques pour la fixation amovible d'une pluralité de parois avant et arrière et/ou de parois latérales.

Toujours une forme de réalisation particulière, ladite ou lesdites parois avant consiste(nt) en une structure de portillon dont une bordure latérale verticale comporte des moyens de fixation coopérant avec des moyens de fixation complémentaires ménagés sur un côté latéral d'un poteau en regard, formant charnière, adaptés pour permettre une fixation de ladite paroi avant sur au moins deux niveaux d'indexation en hauteur, et dont l'autre bordure latérale verticale comporte des moyens de fixation activables/désactivables, de type verrou, coopérant avec des moyens de fixation complémentaires ménagés sur un côté latéral du poteau en regard, adaptés pour permettre un verrouillage amovible de ladite paroi avant sur au moins deux niveaux d'indexation en hauteur.

De leur côté, ladite ou lesdites parois arrière consiste(nt) avantageusement en une structure dont les deux bordures latérales verticales comportent des moyens de fixation coopérant avec des moyens de fixation complémentaires ménagés sur un côté latéral d'un poteau en regard, adaptés là encore pour permettre une fixation de ladite paroi arrière sur au moins deux niveaux d'indexation en hauteur.

Lesdites parois latérales consistent avantageusement pour leur part en un panneau de matière plastique délimité par deux bordures latérales, une bordure supérieure et ladite bordure inférieure ; en outre, ledit panneau de matière comporte au moins une trappe située à un niveau de hauteur supérieur à 80 cm à partir de leur bordure inférieure, de préférence de l'ordre de 90 cm.

Dans une forme de réalisation possible, le dispositif de cloisonnement comporte un fond formé au moins en partie d'un système de plancher/caillebotis comportant une structure de plancher/caillebotis ou plusieurs structures de planchers/caillebotis juxtaposées, chacune desdites structures de plancher/caillebotis comportant une face inférieure, une face supérieure, deux côtés d'extrémité et deux côtés latéraux ;
la distance entre lesdits côtés d'extrémité correspond au moins à la distance entre les faces opposées des poteaux du côté avant et des poteaux du côté arrière ; en outre, lesdits côtés latéraux de ladite structure de caillebotis comportent des ailes latérales s'étendant dans le plan de ladite face supérieure, lesquelles ailes latérales viennent se positionner le long des côtés des poteaux en regard.

Selon encore une autre particularité, le dispositif de cloisonnement comporte une poutre rapportée entre les deux côtés latéraux de deux structures de planchers/caillebotis juxtaposées latéralement, en cas d'absence de paroi latérale à ce niveau, laquelle poutre rapportée est ménagée entre deux poteaux des côtés avant et arrière pour combler l'espace entre lesdites structures de planchers/caillebotis.

### DESCRIPTION DETAILLEE DE L'INVENTION

L'invention sera encore illustrée, sans être aucunement limitée, par la description suivante, en relation avec les dessins annexés dans lesquels :
- la figure 1 est une vue en perspective éclatée d'une première forme de réalisation possible d'un dispositif de cloisonnement, qui n'entre pas dans le champ de protection des revendications, avec une structure de plancher/caillebotis ;
- la figure 2 est une vue en perspective du dispositif de cloisonnement de la figure 1, une fois ses différentes parties constitutives assemblées ;
- la figure 3 est une vue partielle du dispositif de cloisonnement de la figure 2, illustrant le détail de la fixation de sa paroi avant sur les poteaux associés ;
- la figure 4 est une vue en perspective d'un dispositif de cloisonnement similaire à celui illustré sur les figures 1 à 3, mais ici dépourvu de structure de plancher/caillebotis ;
- les figures 5, 6 et 7 illustrent trois variantes du dispositif de cloisonnement qui n'entrent pas dans le champ de protection des revendications, en configuration « collective », réalisées au moyen des parois et poteaux identiques à ceux du dispositif de cloisonnement illustré sur les figures 1 à 4 ;
- la figure 8 est une vue en perspective éclatée d'une autre mode de réalisation possible d'un dispositif de cloisonnement conforme à l'invention comportant des poteaux différents de ceux illustrés sur les figures 1 à 7 ;
- la figure 9 est une vue en perspective du dispositif de cloisonnement illustré sur la figure 8, après montage ;
- la figure 10 est une vue de face du dispositif de cloisonnement illustré sur la figure 9 ;
- la figure 11 est une vue partielle du dispositif de cloisonnement illustré sur les figures 9 et 10, détaillant la structure de charnière de sa paroi avant ;
- la figure 12 est une vue partielle du dispositif de cloisonnement illustré sur les figures 9 et 10, détaillant la structure du verrou de sa paroi avant ;
- la figure 13 est une vue en perspective du dispositif de cloisonnement des figures 8 à 12, ici dépourvu de structure de plancher/caillebotis ;
- la figure 14 est une vue du dispositif de cloisonnement illustré sur les figures 8 à 12, monté selon une configuration permettant d'obtenir des extensions avant latérales ;
- la figure 15 est une vue partielle illustrant le montage des parois latérales dans la gorge traversante des poteaux, dans le cadre des dispositifs de cloisonnement des figures 8 à 14, en particulier pour obtenir l'indexage en hauteur desdites parois latérales ;
- la figure 16 est une vue en perspective qui illustre une variante de réalisation d'un dispositif de cloisonnement conforme à l'invention, de type « collectif » obtenu à partir de parois et de poteaux identiques à ceux utilisés dans le cadre du mode de réalisation des figures 8 à 12 ;
- la figure 17 est une vue en perspective d'une poutre utilisée lors de la juxtaposition latérale d'une pluralité de structures de planchers/caillebotis ;
- la figure 18 est une vue en perspective qui illustre encore une variante d'un dispositif de cloisonnement selon l'invention, obtenu à partir de parois et de poteaux identiques à ceux utilisés dans le cadre du mode de réalisation des figures 8 à 12 ;
- la figure 19 est une vue en perspective d'une structure de plancher/caillebotis apte à être utilisée dans le cadre d'un dispositif de cloisonnement conforme à l'invention, vue en perspective par dessus ;
- la figure 20 est une vue de la structure de plancher/caillebotis illustrée sur la figure 19, vue en perspective par-dessous.

Le dispositif de cloisonnement 1 illustré sur les figures est adapté pour parquer des animaux, en particulier des veaux.

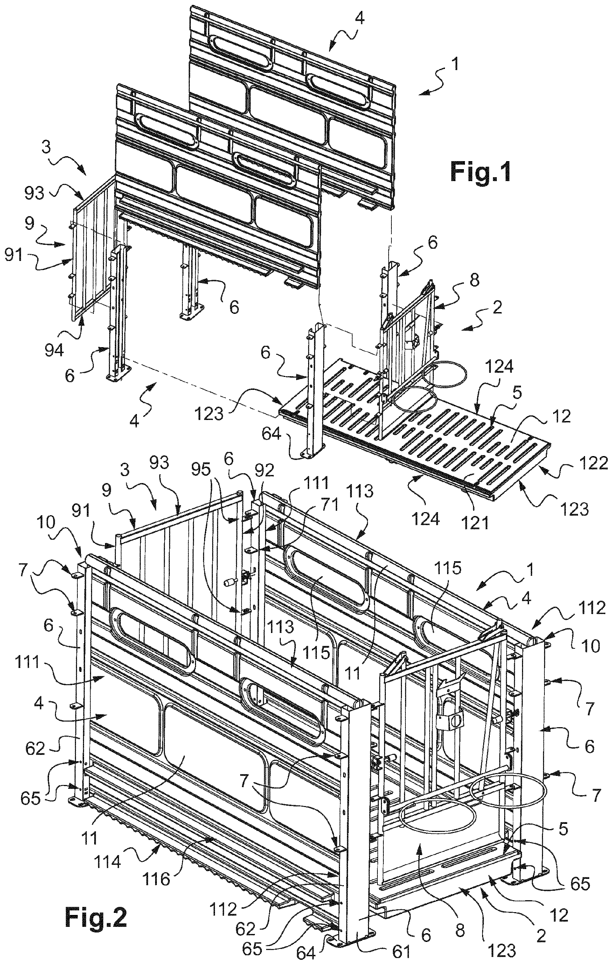

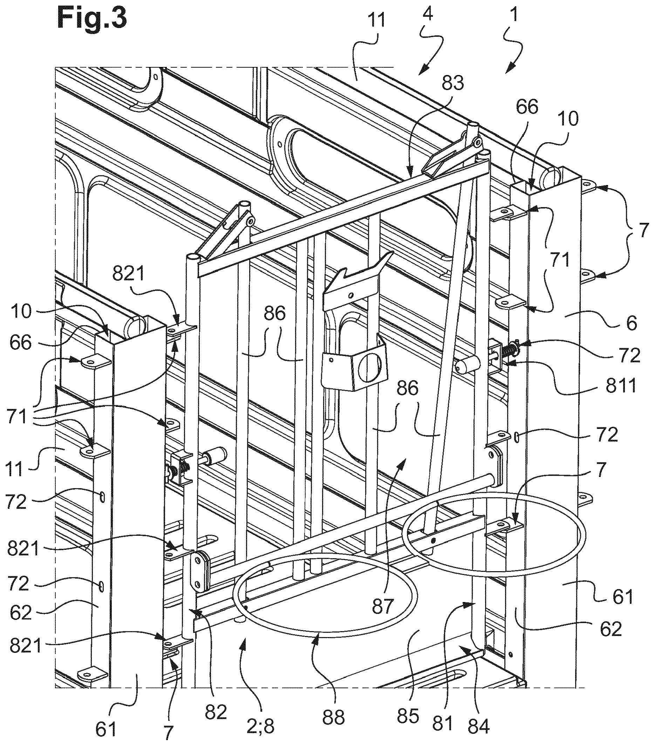

Une première forme de réalisation possible de ce dispositif de cloisonnement, qui n'entre pas dans le champ de protection des revendications, est illustrée sur les figures 1 à 3.

Comme on peut le voir sur ces figures 1 à 3, le dispositif de cloisonnement 1 est de forme générale parallélépipédique et il comprend un côté avant 2, un côté arrière 3, deux côtés latéraux 4 et un fond 5.

Le côté avant 2 comprend deux poteaux 6 comportant chacun, sur deux de leurs côtés opposés, des moyens 7 adaptés pour la fixation amovible d'une bordure latérale d'une paroi avant 8.

Le côté arrière 3 comprend également deux poteaux 6 comportant chacun, sur deux de leurs côtés opposés, des moyens 7 adaptés pour la fixation amovible d'une bordure latérale d'une paroi arrière 9.

Les quatre poteaux 6 sont identiques et ils comportent des moyens 10 pour la fixation amovible d'une paroi latérale 11 en vue de constituer lesdits côtés latéraux 4.

Ces poteaux 6 consistent ici en une structure métallique pliée et mécano soudée à section transversale en U, formée d'une base 61 et de deux ailes latérales 62 qui délimitent une gorge d'encastrement constituant les moyens de fixation 10 précités. Cette gorge 10 débouche en partie supérieure.

En partie inférieure, les poteaux 6 sont munis d'un socle 64 pour la fixation au sol au moyen de vis.

A noter encore que la partie inférieure de la gorge d'encastrement 10 comporte un système de butée 65 destiné à coopérer avec la bordure inférieure des parois latérales 11 pour positionner cette dernière au-dessus du niveau dudit socle de fixation 64 et donc au-dessus du niveau du sol.

Ce système de butée 65 consiste en une tige, en un rond, en une goupille ou autre reliant les deux ailes latérales 62 par l'intermédiaire de jeux d'orifices ménagés dans ces dernières. Elle est prévue amovible pour permettre le montage des parois latérales 11 sur plusieurs niveaux d'indexation en hauteur (en appui contre le sol, sans butée, ou au-dessus du sol, avec butée). Le cas échéant, plusieurs jeux d'orifices peuvent être prévus à différentes hauteurs sur les poteaux 6 pour augmenter les niveaux d'indexation possibles au moyen de la tige ou du rond associé.

Les socles 64 sont adaptés pour permettre le positionnement dos à dos (base 61 contre base 61) de deux poteaux 6 pour autoriser la juxtaposition de plusieurs parois latérales 11, comme décrit plus loin.

A noter encore que les deux ailes 62 peuvent comporter des retours internes 66, orientés l'un vers l'autre, pour renforcer la structure des poteaux 6.

Les moyens 7 adaptés pour la fixation amovible des bordures latérales des parois avant 8 et arrière 9 consistent - en des plats soudés 71 munis d'un orifice d'axe vertical, ménagés sur la face extérieure des ailes 62, et - en des orifices 72 d'axe horizontal, aménagés dans lesdites ailes 62.

La paroi avant 8 consiste ici en une structure de portillon métallique de forme générale parallélépipédique, comportant deux bordures latérales verticales 81 et 82, une bordure supérieure 83 et une bordure inférieure 84.

Sa partie inférieure est munie d'une plaque d'obturation 85 et sa partie supérieure est munie d'une pluralité de barreaux verticaux parallèles 86, et d'une structure classique de cornadis 87, pour le passage en son travers de la tête des animaux.

La bordure latérale verticale 82 de la paroi 8 comporte des moyens de fixation 821 qui coopèrent avec les moyens de fixation 71 complémentaires ménagés sur le côté latéral du poteau 6 en regard, pour former une structure de charnière.

Ces moyens de fixation 821 sont similaires aux moyens de fixation 71 et consistent en des plats soudés munis d'un orifice d'axe vertical.

Deux plats 821 et 71 sont associés par superposition et les deux orifices en correspondance sont reliés par un axe vertical rapporté, tel qu'une broche, goupille, boulon ou autre (non représenté sur les figures).

De son côté, la bordure verticale 81 comporte un moyen de fixation activable/désactivable 811, ici en forme de targette ou verrou à ressort, adapté pour coopérer avec l'un des orifices 72 ménagés sur le côté latéral du poteau 6 en regard, pour verrouiller de manière amovible la position fermée de la paroi avant 8.

Selon une particularité de la présente invention, les moyens de fixation 71, 72 des poteaux 6, et les moyens de fixation 821 et 811 de la paroi avant 8, sont adaptés pour permettre une fixation de ladite paroi avant 8 sur au moins deux niveaux d'indexation en hauteur, ici, en l'occurrence, sur deux niveaux d'indexation en hauteur. Le nombre de plats 71 et 821 et le nombre d'orifices 72, ainsi que leur positionnement, sont adaptés en conséquence.

De plus, la paroi avant 8 est structurée pour permettre un montage à droite ou à gauche de sa structure de charnière 71-821 et du système de verrou 72-811.

On notera que cette paroi avant 8 est avantageusement équipée de plusieurs cercles 88 support de seaux d'alimentation qui s'étendent du côté de sa face externe.

La paroi arrière 9 consiste en une structure métallique barreaudée, de forme générale parallélépipédique, comportant deux bordures latérales verticales 91 et 92, une bordure supérieure 93 et une bordure inférieure 94.
Ses bordures latérales verticales 91 et 92 comportent des moyens de fixation amovible 95 qui coopèrent avec les moyens de fixation 71 complémentaires aménagés sur les ailes latérales du poteau 6 en regard.

Ces moyens de fixation 95 sont similaires aux moyens de fixation 71 et consistent en des plats soudés munis d'un orifice d'axe vertical.

Deux plats 71 et 95 sont associés par superposition et les deux orifices en correspondance sont reliés par un axe vertical rapporté (broche, goupille, boulon ou autre).

On notera que cette paroi arrière 9 peut aussi comporter un système de verrou sur l'une de ses bordures latérales 91 ou 92, de manière à obtenir une structure de portillon similaire à la paroi avant 8.

Ici encore, selon une particularité de la présente invention, les moyens de fixation 71 des poteaux 6, et les moyens de fixation 95 de la paroi arrière 9, sont adaptés pour permettre la fixation de ladite paroi arrière 9 sur au moins deux niveaux d'indexation en hauteur, ici en l'occurrence sur deux niveaux d'indexation en hauteur. Le nombre de plats 71 et 95, et leur positionnement, sont adaptés en conséquence.

Les parois latérales 11 consistent en des panneaux de matière plastique, obtenus par moulage injection, extrusion ou rotomoulage.

Ils ont une forme générale parallélépipédique et ils sont délimités par deux bordures latérales verticales 111 et 112, par une bordure supérieure 113 et par une bordure inférieure 114.

Leur hauteur correspond sensiblement à la hauteur des poteaux 6 ; leur épaisseur est légèrement inférieure à l'écartement des ailes latérales 62 des poteaux 6, ou à la distance séparant les extrémités libres en regard des retours internes 66, pour que leurs bordures latérales 111 et 112 puissent venir s'encastrer dans les gorges d'encastrement 10 desdits poteaux 6.

On remarque la présence de trappes 115 dans la partie supérieure des parois latérales 11, pour permettre aux animaux de se voir entre deux dispositifs de cloisonnement juxtaposés.
Ces trappes 115 sont ici au nombre de deux et ont une forme oblongue dont le grand axe s'étend horizontalement, c'est-à-dire parallèlement aux bordures supérieure 113 et inférieure 114. Elles sont ménagées au-dessus d'une zone pleine inférieure dont la hauteur est de l'ordre de 80 à 100 cm, de préférence de l'ordre de 90 cm de hauteur. Les trappes 115 s'étendent, donc vers le haut à partir de cette hauteur de 80 à 100 cm (de préférence à partir d'une hauteur de l'ordre de 90 cm).
De préférence encore ces trappes 115 comportent des orifices sur leur pourtour qui permettent la fixation amovible de plaques assurant leur obturation.

Le montage du dispositif de cloisonnement 1 s'effectue en fixant au sol les poteaux 6, par l'intermédiaire de leur socle 64, au moyen de vis, avec les gorges d'encastrement des poteaux 6 du côté avant 2 en regard des gorges d'encastrement des poteaux 6 du côté arrière 3.
Alors, les deux parois latérales 11 peuvent être encastrées par simple coulissement vertical dans lesdites gorges 10, par le haut des poteaux 6, jusqu'à ce que leur bordure inférieure 114 vienne en appui contre le système de butée basse 65 précité (ou contre le sol en absence de butée 65).
Des premiers orifices peuvent être adaptés pour maintenir un léger espace entre la bordure inférieure 114 des parois latérales 11 et le sol, en particulier pour permettre le passage des liquides (notamment du jus issu des urines ou des eaux de lavage) ; et des seconds orifices peuvent être adaptés pour positionner la bordure inférieure 114 des parois latérales 11 au niveau de la face supérieure d'une structure de plancher/caillebotis 12 rapportée.

Les parois avant 8 et arrière 9 sont fixées respectivement entre les deux poteaux 6 du côté avant 2, et entre les deux poteaux 6 du côté arrière 3, par les moyens de fixation précités 71, 72, 811 et 821.

Le fond 5 du dispositif de cloisonnement 1 peut être constitué par une structure de plancher/caillebotis 12 rapportée (figure 1 notamment).

Cette structure de plancher/caillebotis 12 consiste en un plateau perforé, avantageusement réalisé monobloc en matière plastique rotomoulée, délimité par une face supérieure 121, une face inférieure 122, deux côtés d'extrémités 123 et deux côtés latéraux 124.

L'épaisseur de la structure de plancher/caillebotis 12 est de plusieurs centimètres, voire de l'ordre de 15 à 20 cm. Sa longueur (entre ses deux côtés d'extrémités 123) correspond à la distance entre les faces éloignées des poteaux 6 du côté avant 2 et des poteaux 6 du côté arrière 3 (c'est-à-dire à la distance entre les bases 61 des poteaux 6 avant et arrière) ; et sa largeur (entre ses deux côtés latéraux 124) correspond à la distance entre les faces en regard des deux poteaux 6 des côtés avant 2, ou arrière 3 (c'est-à-dire à la distance entre les ailes latérales 62 des poteaux 6 qui se font face).

Dans un tel cas d'utilisation d'une structure de plancher/caillebotis 12, les parois avant 8 et arrière 9 sont fixées à un niveau « haut » sur les poteaux 6, de manière à ce que la bordure inférieure de ces parois se situe au niveau ou juste au-dessus de la face supérieure 121 de ladite structure de plancher/caillebotis 12.

On remarque que les parois latérales 11 comportent des ailes latérales 116, sur leurs deux faces en opposition, disposées parallèlement à leur bordure inférieure 114, un peu au-dessus de cette dernière. Ces ailes 116 sont adaptées pour combler l'espace entre lesdites parois latérales 11 et lesdits côtés latéraux 124 de la structure de plancher/caillebotis 12 ; le niveau en hauteur de ces ailes latérales 116 est adapté pour qu'elles viennent se positionner dans le prolongement de la face supérieure 121 de la structure de plancher/caillebotis 12, alors même que ces parois latérales 11 sont en position basse.

On notera aussi que ces parois latérales 11 peuvent être placées en position haute grâce au système de butée 65, pour que leur bordure inférieure 114 arrive au niveau de la face supérieure du plancher/caillebotis 12.

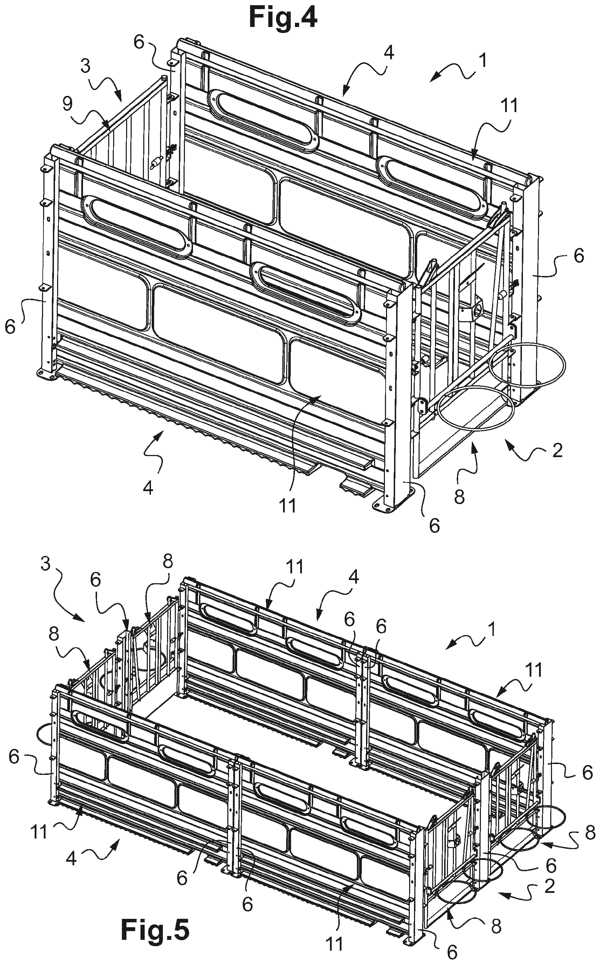

En l'absence de structure de plancher/caillebotis 12, le fond 5 du dispositif de cloisonnement 1 peut être constitué par le sol sur lequel sont fixés les poteaux 6.
Dans ce cas, les parois avant 8 et arrière 9 sont fixées à un niveau « bas » sur les poteaux 6, de manière à ce que leur bordure inférieure se situe juste au-dessus du sol, comme illustré sur la figure 4.

On comprend qu'une telle structure peut se monter et se démonter très facilement.
En particulier, les parois latérales 11 se montent par simple encastrement dans les gorges d'encastrement 10, sans nécessiter d'éléments de fixation complémentaires type vis ou autre ; cela permet leur démontage aisé, par exemple pour leur nettoyage, et également leur remontage aisé.

Le dispositif de cloisonnement 1 illustré sur les figures 1 à 4, avec une paroi avant 8, une paroi arrière 9 et deux parois latérales 11, chacune entre deux poteaux 6, peut être adapté pour parquer un animal, par exemple un veau, en vue de constituer une « case à veau » individuelle.

Partant des éléments individuels de parois 8, 9, 11 et de poteaux 6, de nombreuses configurations de parquage « collectif », ou de « surface augmentée », peuvent être obtenues, avec ou sans séparation(s) interne(s), et avec ou sans structure(s) de plancher/caillebotis 12.

Dans ce cadre, les côtés avant 2 et arrière 3, d'une part, et les côtés latéraux 4, d'autre part, peuvent comporter plusieurs parois avant 8, arrière 9 et latérales 11, maintenues juxtaposées par des poteaux 6 intermédiaires ou par des couples de poteaux 6 intermédiaires disposés dos à dos, avec leur base 61 en contact.

De tels dispositifs de cloisonnement sont représentés uniquement à titre d'exemples sur les figures 5, 6 et 7, avec des éléments constitutifs 6, 8, 9 et 11 identiques à ceux décrits ci-dessus en relation avec les figures 1 à 4.

Le dispositif de cloisonnement 1 illustré sur la figure 5 comprend - un côté avant 2 et un côté arrière 3 formés chacun de deux parois avant 8 en forme de portillon, et - deux côtés latéraux 4 formés chacun de deux parois latérales 11. Les couples de parois 8 sont assemblés au moyen d'un poteau 6 intermédiaire, et les couples de parois latérales 11 sont assemblés au moyen de couples de poteaux 6 intermédiaires (en appui base contre base).
Son fond 5 est formé par le sol.

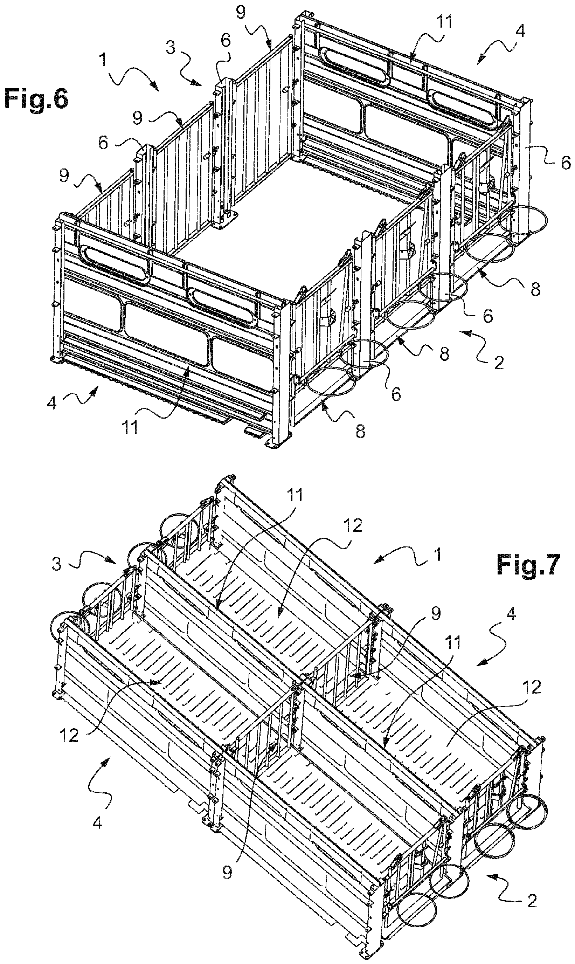

Le dispositif de cloisonnement 1 illustré sur la figure 6 comprend :
- un côté avant 2 formé de trois parois avant 8 assemblées deux à deux par un poteau 6,
- un coté arrière 3 formé de trois parois arrière 9 assemblées deux à deux par un poteau 6, et
- deux côtés latéraux 4 formés chacun d'une paroi latérale 11.
Son fond 5 est formé par le sol.

Le dispositif de cloisonnement 1 illustré sur la figure 7 a une structure périphérique identique à celle de la figure 5, mais il comporte des éléments de parois internes qui divisent l'espace, ainsi que des structures de planchers/caillebotis 12.
En particulier, deux parois arrière 9 divisent l'espace interne longitudinalement, et deux parois latérales 11 divisent l'espace interne latéralement.

En fonction du nombre de parois avant 8 et arrière 9, et du nombre de parois latérales 11, on peut ainsi à volonté et très facilement adapter la surface des dispositifs de cloisonnement 1, cela avec ou sans structure de plancher/caillebotis 12.

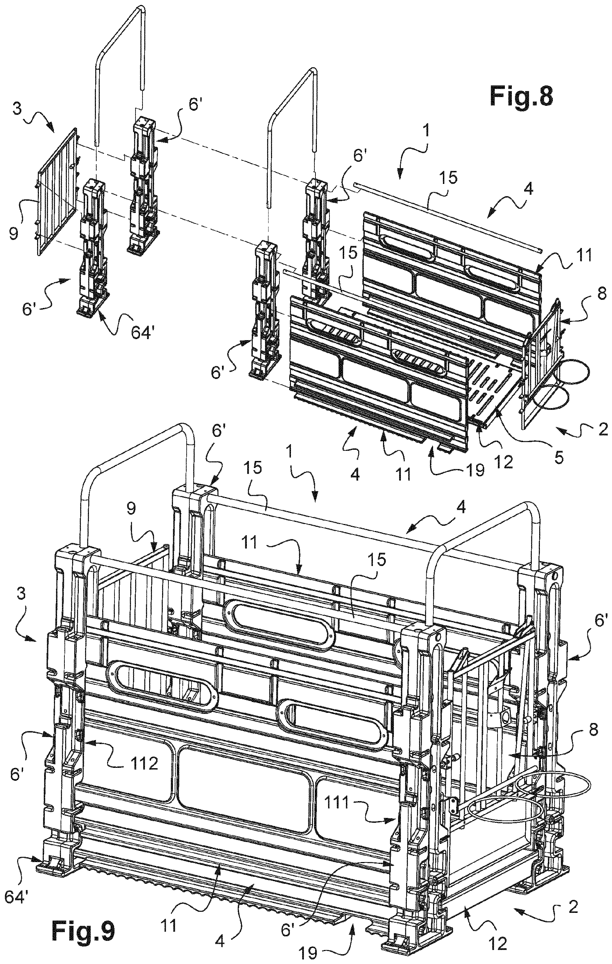

Les dispositifs de cloisonnement 1 illustrés sur les figures 8 à 16 et 18 comportent également un côté avant 2, un côté arrière 3 et deux côtés latéraux 4 ménagés au-dessus d'un fond 5.
Ils sont réalisés à partir d'un assemblage des mêmes parois avant 8, parois arrière 9 et parois latérales 11 que celles décrites ci-dessus en relation avec les figures 1 à 7, cela en association avec des poteaux 6' de structure différente de celle des poteaux 6 décrits en relation avec ces figures 1 à 7 précédentes.

Les poteaux 6' correspondants sont réalisés par moulage de matière plastique, éventuellement munis d'inserts métalliques de renfort. Ils comportent deux côtés latéraux 61' munis de moyens 7' adaptés pour la fixation amovible des bordures latérales des parois avant 8 et arrière 9. Entre ces deux côtés latéraux 61', les poteaux 6' comportent une gorge d'encastrement traversante 10', fermée en partie supérieure et en partie inférieure ; et la partie inférieure de ces poteaux 6' comporte un socle 64' pour la fixation au sol, au moyen de vis.

La gorge d'encastrement traversante 10' est adaptée pour permettre le positionnement et la fixation des parois latérales 11 par encastrement de leurs bordures latérales 111, 112.

En outre, cette gorge traversante 10' est structurée, en relation avec la section verticale des parois latérales 11, pour permettre un réglage de la hauteur de ces parois latérales 11, autorisant un positionnement de ces dernières ici sur deux niveaux d'indexation en hauteur.

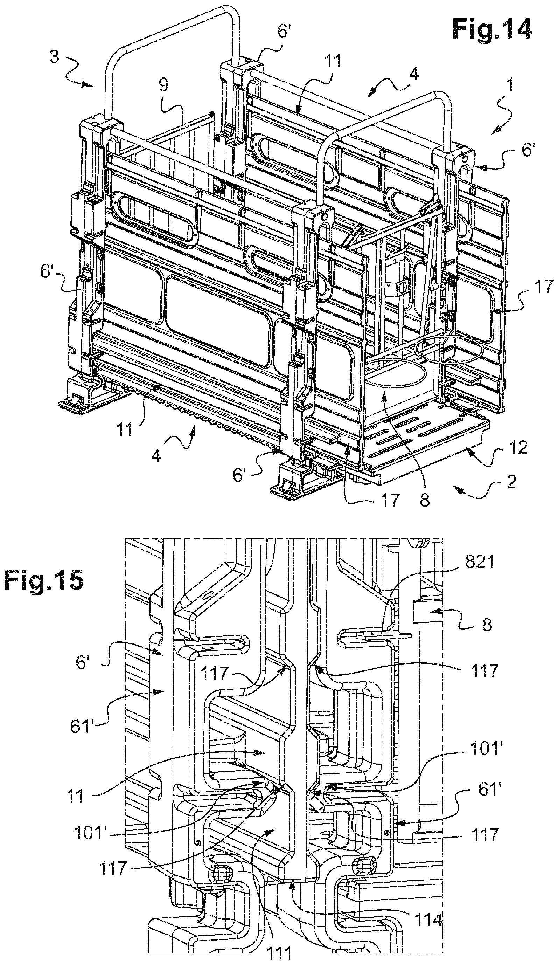

Pour cela, la hauteur de la gorge d'encastrement 10' est supérieure à la hauteur des parois latérales 11 ; en outre, cette gorge d'encastrement 10' comporte des systèmes de rainures 101', coopérant avec plusieurs nervures complémentaires 117 ménagées sur lesdites parois latérales 11, visibles en particulier sur la figure 15.

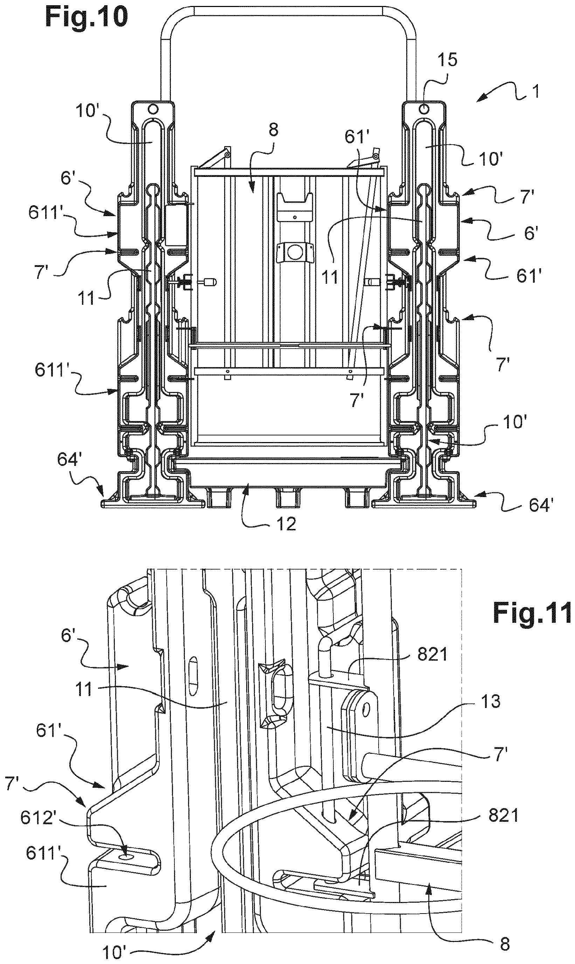

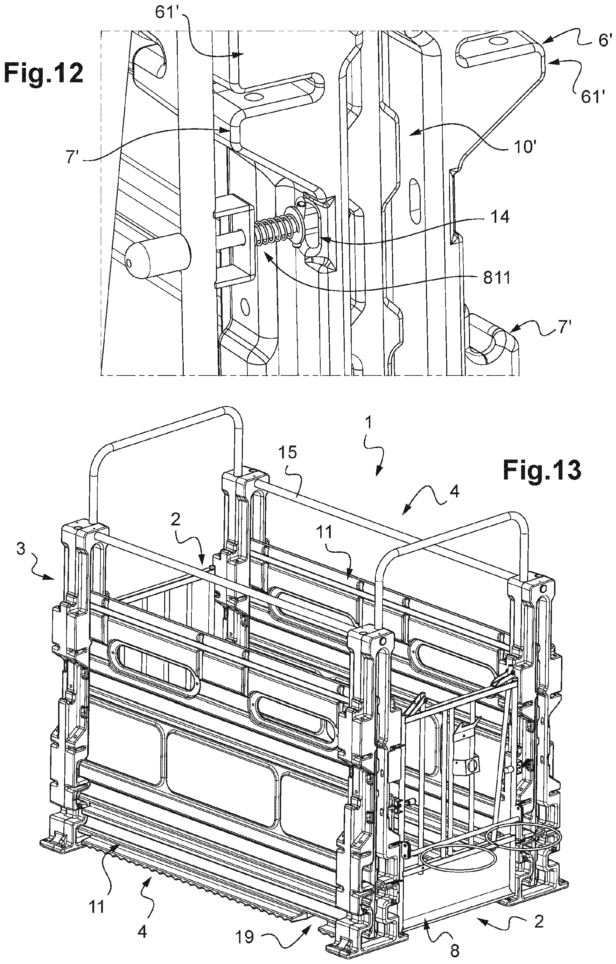

Les moyens de fixation amovible 7' ménagés sur les côtés latéraux 61' des poteaux 6' consistent en des plots de matière 611', munis d'orifices verticaux 612', destinés à être assemblés avec les plats 821 des parois avant 8 et arrière 9, au moyen de broches verticales 13 (figure 11), et munis d'orifices horizontaux 14 pour l'encastrement du verrou activable/désactivable 811 des parois avant 8 (figure 12).

Ici encore, ces moyens de fixation amovible 7' sont adaptés pour permettre la fixation des parois avant 8 et arrière 9 sur deux niveaux d'indexation en hauteur, cela en fonction de la présence, ou non, d'une structure de plancher/caillebotis 12.

Le dispositif de cloisonnement 1 illustré sur les figures 8 à 12 est constitué - d'un côté avant 2 formé d'une paroi avant 8 et de deux poteaux 6', - d'un côté arrière 3 formé d'une paroi arrière 9 et de deux poteaux 6', et - de deux côtés latéraux 4 formés chacun d'une paroi latérale 11.

Le montage de ce dispositif de cloisonnement 1 s'effectue en fixant au sol les poteaux 6' par l'intermédiaire de leur socle 64', au moyen de vis, cela avec leur gorge d'encastrement traversante 10' orientée dans un plan parallèle aux côtés latéraux 4. Les parois latérales 11 sont positionnées par simple encastrement de leurs bordures latérales 111, 112 dans les gorges d'encastrement traversantes 10', et les parois avant 8 et arrière 9 sont assemblées avec les poteaux 6' par l'intermédiaire des moyens de fixation précités (14-811 d'une part et 611 '-612'-13-821 d'autre part).

Ici, les parois latérales 11 sont positionnées au niveau bas, avec leur bordure inférieure 114 située légèrement au-dessus du sol, de manière à laisser passer les liquides.
Ces parois latérales 11 peuvent aussi être prévues pour venir en contact avec le sol ; dans ce cas, leur bordure inférieure 114 comporte des ouvertures débouchantes adaptées pour laisser passer les liquides.

De leur côté, les parois avant 8 et arrière 9 sont positionnées au niveau haut, du fait de la présence d'une structure de plancher/caillebotis 12 pour former le fond 5.

Sur les figures 8 à 10, on remarque que la partie supérieure des poteaux 6' est munie :
- d'orifices ménagés au-dessus des gorges d'encastrement traversantes 10', pour la réception de barres latérales 15 de rigidification, situées au-dessus des parois latérales 11, et
- d'orifices ménagés dans leur face de dessus, pour la réception d'arceaux de rigidification montés au-dessus des parois avant 8 et arrière 9.

Comme illustré sur la figure 13, en cas d'absence de structure de plancher/caillebotis 12, les parois avant 8 et arrière 9 sont fixées en position basse sur les poteaux 6', pour que leur bordure inférieure soit située juste au-dessus du niveau du sol ou en appui sur ce dernier.

En cas de présence d'une structure de plancher/caillebotis 12, les parois latérales 11 peuvent être placées en position basse, comme illustré sur les figures 8 à 10, ou en position haute comme illustré sur la figure 14, cela au moyen des jeux de rainures/nervures complémentaires (101' ; 117), formant butées (visibles en détails sur la figure 15).

Dans leurs positions stables haute et basse, des jeux de butées en translation sont également prévus sur les parois latérales 11 afin d'empêcher leur désencastrement par translation.

Pour extraire les parois latérales 11 des gorges d'encastrement traversantes 10' (en vue de leur nettoyage ou de leur changement de position), ces dernières sont relevées de quelques centimètres dans leur gorge d'accueil 10', afin de désactiver lesdits jeux de butées en translation précités, avant de les extraire par simple coulissement longitudinal au travers de la gorge d'encastrement 10'.

Comme on peut le voir sur la figure 14, le dispositif de cloisonnement 1 peut être structuré de sorte que les parois latérales 11 traversent complètement les gorges 10' des poteaux 6' du côté avant 2, pour que leur partie avant 17 s'étende en saillie au-delà du niveau des poteaux 6' associés. Ces parties avant 17 des parois latérales 11 constituent alors une extension ou joue avant, de part et d'autre des parois avant 8, qui permettent de limiter les contacts entre animaux, au travers des parois avant 8, entre deux espaces de cloisonnement juxtaposés.

Le positionnement stable de cette configuration avec extensions avant 17 est obtenu au moyen d'une échancrure 19 ménagée dans la bordure inférieure des parois latérales 11 (visible notamment figures 8, 9 et 13). Les extrémités de ces échancrures 19 constituent des butées destinées à coopérer avec les côtés en regard des poteaux 6'.

Cette configuration avec présence d'extensions avant 17 nécessite de fixer les poteaux 6' des côtés avant 2 et arrière 3 plus près les uns des autres, par rapport aux modes de réalisation décrits auparavant (dans le cas où on utilise des parois latérales 11 identiques à celles des modes de réalisation précédents).

Là encore, on comprend qu'une telle structure peut se monter et se démonter très facilement. En particulier, les parois latérales 11 se montent par simple encastrement dans les gorges traversantes 10', sans nécessiter d'éléments de fixation complémentaires type vis ou autre.

Le dispositif de cloisonnement 1 illustré sur les figures 8 à 15, avec une paroi avant 8, une paroi arrière 9 et deux parois latérales 11, chacune entre deux poteaux 6', peut être adapté pour parquer un animal, par exemple un veau, pour constituer une « case à veau » individuelle.

Partant des éléments individuels de parois 8, 9, 11 et de poteaux 6', de nombreuses configurations de parquage « collectif » peuvent être obtenues, avec ou sans séparation(s) interne(s), avec ou sans structure(s) de plancher/caillebotis 12, et avec ou sans extension(s) avant 17 des parois latérales 11.

Dans ce cadre, les côtés avant 2 et arrière 3, d'une part, et les côtés latéraux 4, d'autre part, peuvent comporter plusieurs parois avant 8, arrière 9 et latérales 11, maintenues juxtaposées par des poteaux 6'.

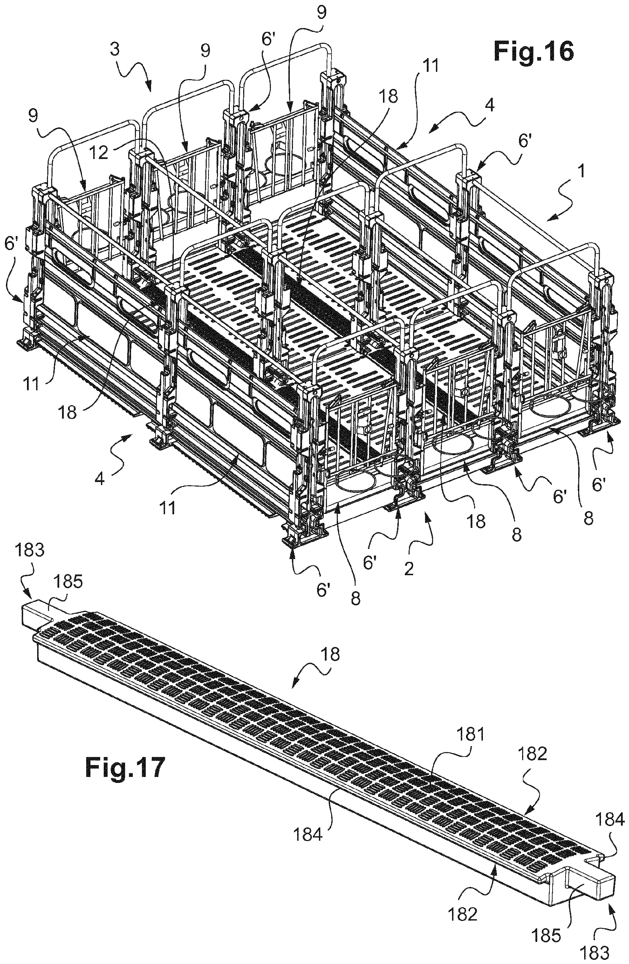

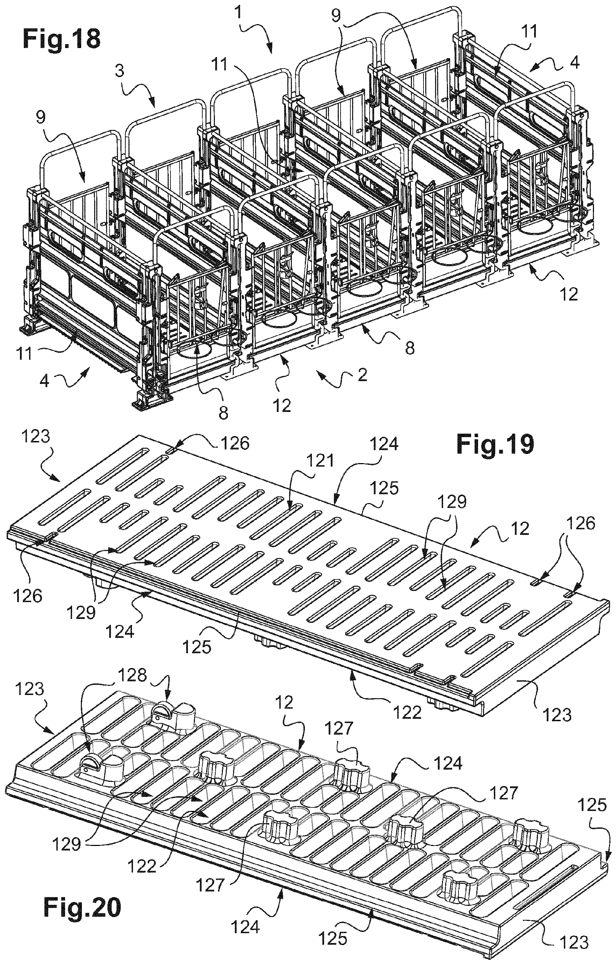

De tels dispositifs de cloisonnement sont représentés à titre purement indicatif sur les figures 16 et 18, avec des éléments constitutifs 6', 8, 9 et 11, identiques à ceux décrits ci-dessus en relation avec les figures 8 à 15.

Le dispositif de cloisonnement 1 illustré sur la figure 16 comprend :
- un côté avant 2 formé de trois parois avant 8 assemblées deux à deux par un poteau 6',
- un côté arrière 3 formé de trois parois arrière 9 assemblées deux à deux par un poteau intermédiaire 6' (ces parois arrière 9 peuvent se présenter sous la forme de parois ouvrantes pivotantes, comme les parois avant 8), et
- deux côtés latéraux 4 formés chacun de deux parois latérales 11 assemblées entre elles par un poteau intermédiaire 6'.

Le fond 5 de ce dispositif de cloisonnement est recouvert d'un système de plancher/caillebotis comprenant une pluralité de structures de planchers/caillebotis 12.

Entre deux structures de planchers/caillebotis 12 juxtaposées latéralement on rapporte des poutres 18 dans l'alignement de l'épaisseur des poteaux intermédiaires 6', pour compenser l'absence de parois latérales 11 internes.

Cette ou ces poutres 18 sont rapportées entre deux poteaux 6' des côtés avant 2 et arrière 3 pour combler l'espace entre lesdites structures de planchers/caillebotis 12 juxtaposées.

On notera que des poteaux 6' doivent être prévus le cas échéant entre deux poutres 18 juxtaposées longitudinalement.

L'une de ces poutres 18 est représentée isolément sur la figure 17. Elle comporte une face supérieure 181, deux côtés latéraux 182 et deux côtés d'extrémités 183.

Les deux côtés latéraux 182 comportent une aile longitudinale saillante 184 s'étendant dans le prolongement de la face supérieure 181 ; les côtés d'extrémité 183 comportent un organe saillant 185 en forme de tenon destiné à pénétrer au moins partiellement dans l'épaisseur de la base des poteaux 6'.

La face supérieure 181 avec les ailes latérales 184 est adaptée pour venir se positionner dans le plan de la face supérieure 121 de deux structures de planchers/caillebotis 12 juxtaposées.

Le dispositif de cloisonnement 1, illustré sur la figure 18 comprend - un côté avant 2 formé de cinq parois avant 8 assemblées deux à deux par un poteau 6', - un côté arrière 3 formé de cinq parois arrière 9 assemblées deux à deux par un poteau 6', et - deux côtés latéraux 4 formés d'une paroi latérale 11. Des parois latérales internes 11 séparent l'espace de cloisonnement en une pluralité de cases et chaque case comporte un fond 5 formé d'une structure de plancher/caillebotis 12.

L'une des structures de planchers/caillebotis 12 utilisable pour l'ensemble des dispositifs de cloisonnement décrits précédemment (figures 1, 2, 7, 8, 9, 10, 14, 16 et 18) est représentée sur les figures 19 et 20.

Sur ces figures, on retrouve la structure de plancher/caillebotis 12 formée d'un plateau muni d'une face supérieure 121, d'une face inférieure 122, de deux côtés d'extrémités 123 et de deux côtés latéraux 124.

Les côtés latéraux 124 comportent une aile longitudinale saillante 125 qui s'étend dans le prolongement de la face supérieure 121. Au sein de ces ailes 125 on remarque la présence d'encoches 126, dans lesquelles des nervures des poteaux 6' sont destinées à venir s'encastrer.

Sur la face inférieure 122 on remarque la présence de plots supports 127 en saillie destinés à venir reposer au sol, pour faciliter le nettoyage, ainsi que deux roues 128 situées à proximité de l'un des côtés d'extrémité 123 pour faciliter la manipulation des structures de planchers/caillebotis 12.

Une pluralité d'ouvertures 129 traverse l'épaisseur de la structure de plancher/caillebotis pour permettre l'évacuation des urines et fèces et des_liquides de nettoyage.

De tels dispositifs de cloisonnement 1 peuvent être mis en place à tout endroit dans un bâtiment d'élevage, sur un sol préparé à l'avance. Le cas échéant, il est possible de les positionner contre un mur, et dans ce cas, les parois arrière 9 peuvent ne plus être nécessaires.

Le dispositif de cloisonnement 1 conforme à l'invention peut prendre de nombreuses configurations, fonction du site et de l'élevage à équiper. Ses parois, en particulier ses parois latérales 11, sont indexables en hauteur, ce qui permet de répondre aux normes et préconisations de hauteur de cloisonnement, fonction du type et/ou de l'âge des animaux.

## Revendications

1. Dispositif de cloisonnement (1) pour animaux, en particulier pour des veaux, lequel dispositif (1) est de forme générale parallélépipédique comprenant un côté avant (2), un côté arrière (3), deux côtés latéraux (4) et un fond (5),
lequel côté avant (2) comprend au moins deux poteaux (6') comportant chacun, sur deux de leurs côtés opposés (61'), des moyens adaptés pour la fixation d'une bordure latérale d'une paroi avant (8), laquelle paroi avant (8) comporte une bordure inférieure (84),
lequel côté arrière (3) comprend au moins deux poteaux (6') comportant chacun, sur deux de leurs côtés opposés (61'), des moyens adaptés pour la fixation d'une bordure latérale d'une paroi arrière (9), laquelle paroi arrière (9) comporte une bordure inférieure (94),
et lesdits poteaux (6') desdits côtés avant (8) et arrière (9) comportant des moyens en forme de gorge d'encastrement (10') pour la fixation d'une bordure latérale (111, 112) d'une paroi latérale (11), pour constituer lesdits côtés latéraux (4), lesquelles parois latérales (11) comportent une bordure inférieure (114),
et lesquelles gorges d'encastrement (10') sont ménagées sur toute ou pratiquement toute la hauteur desdits poteaux (6'), adaptées pour le montage et la tenue desdites parois latérales (11) par simple coulissement,
lequel dispositif de cloisonnement (1) a la possibilité de comprendre un fond (5) formé au moins en partie d'un système de plancher/caillebotis comportant une structure de plancher/caillebotis (12) ou plusieurs structures de plancher/caillebotis (12) juxtaposées, chacune desdites structures de plancher/caillebotis (12) comportant une face inférieure (122), une face supérieure (121), deux côtés d'extrémités (123) et deux côtés latéraux (124),
**caractérisé en ce que** lesdits poteaux (6') sont munis d'une gorge d'encastrement traversante (10'), fermée en partie supérieure, la partie inférieure desdits poteaux (6') comportant un socle (64') pour leur fixation au sol au moyen de vis,
ladite gorge traversante (10') étant adaptée pour permettre le positionnement desdites parois latérales (11) par encastrement, avec une partie de chaque côté dudit poteau (6'), pour former une extension avant (17), de part et d'autre de ladite ou desdites parois avant (8),
et **en ce que** lesdits poteaux (6') comportent des moyens pour le montage et la tenue de ladite paroi avant (8), et/ou de ladite paroi arrière (9), et/ou desdites parois latérales (11), sur au moins deux niveaux d'indexation en hauteur, de manière adaptée pour permettre :
- leur positionnement bas, avec leur bordure inférieure (84, 94, 114) à proximité du sol, ou en appui contre celui-ci, dans le cas où ledit fond (5) est réalisé par le sol, et
- leur positionnement haut, avec leur bordure inférieure (84, 94, 114) à distance du sol, au niveau ou pratiquement au niveau de la face supérieure (121) de ladite structure de plancher/caillebotis rapportée (12) constituant ledit fond (5).

2. Dispositif de cloisonnement (1) selon la revendication 1, **caractérisé en ce que** lesdites parois latérales (11) et/ou lesdits poteaux (6') comportent des moyens de réglage de hauteur (101', 117) autorisant un positionnement de chaque paroi latérale (11) sur au moins deux niveaux d'indexation en hauteur dans la gorge d'encastrement traversante (10') du poteau associé (6').

3. Dispositif de cloisonnement (1) selon la revendication 2, **caractérisé en ce que** lesdits moyens de réglage de hauteur consistent en des systèmes de rainure(s)/nervure(s) complémentaires (101', 117), formant butées, ménagées dans ladite gorge traversante (10') et sur lesdites parois latérales (11).

4. Dispositif de cloisonnement (1) selon l'une quelconque des revendications 1 à 3, **caractérisé en ce que** lesdits côtés avant (2) et arrière (3), et/ou lesdits côtés latéraux (4), comportent plus de deux poteaux (6') identiques pour la fixation amovible d'une pluralité de parois avant (8) et arrière (9) et/ou de parois latérales (11).

5. Dispositif de cloisonnement (1) selon l'une quelconque des revendications 1 à 4, **caractérisé en ce que** ladite ou lesdites parois avant (8) consiste(nt) en une structure de portillon dont une bordure latérale verticale (82) comporte des moyens de fixation (821) coopérant avec des moyens de fixation complémentaires (611', 612') ménagés sur un côté latéral (61') d'un poteau (6') en regard, formant charnière, adaptés pour permettre une fixation de ladite paroi avant (8) sur au moins deux niveaux d'indexation en hauteur, et dont l'autre bordure latérale verticale (81) comporte des moyens de fixation (811) activables/désactivables, du type verrou, coopérant avec des moyens de fixation complémentaires (14) ménagés sur un côté latéral (61') du poteau en regard (6'), adaptés pour permettre un verrouillage amovible de ladite paroi avant (8) sur au moins deux niveaux d'indexation en hauteur.

6. Dispositif de cloisonnement (1) selon l'une quelconque des revendications 1 à 5, **caractérisé en ce que** ladite ou lesdites parois arrière (9) consiste(nt) en une structure dont les deux bordures latérales verticales (91, 92) comportent des moyens de fixation (95) coopérant avec des moyens de fixation complémentaires (611', 612') ménagés sur un côté latéral (61') d'un poteau (6') en regard, adaptés pour permettre une fixation de ladite paroi arrière (9) sur au moins deux niveaux d'indexation en hauteur.

7. Dispositif de cloisonnement (1) selon l'une quelconque des revendications 1 à 6, **caractérisé en ce que** lesdites parois latérales (11) consistent en un panneau de matière plastique délimité par deux bordures (111, 112) latérales, une bordure supérieure (113) et ladite bordure inférieure (114),
et **en ce que** ledit panneau de matière comporte au moins une trappe (115) située à un niveau de hauteur supérieur à 80 cm à partir de ladite bordure inférieure (114), de préférence de l'ordre de 90 cm.

8. Dispositif de cloisonnement (1) selon l'une quelconque des revendications 1 à 7, **caractérisé en ce qu'**il comprend un fond (5) formé au moins en partie d'un système de plancher/caillebotis comportant une structure de plancher/caillebotis (12) ou plusieurs structures de plancher/caillebotis (12) juxtaposées, chacune desdites structures de planchers/caillebotis (12) comportant une face inférieure (122), une face supérieure (121), deux côtés d'extrémité (123) et deux côtés latéraux (124),
la distance entre lesdits côtés d'extrémités (123) correspondant au moins à la distance entre les faces opposées des poteaux (6') du côté avant (2) et des poteaux (6') du côté arrière (3),
lesdits côtés latéraux (124) de ladite structure de plancher/caillebotis (12) comportant des ailes latérales (125) s'étendant dans le plan de ladite face supérieure (121), lesquelles ailes latérales (125) viennent se positionner le long des côtés des poteaux en regard (6').

9. Dispositif de cloisonnement (1) selon la revendication 8, **caractérisé en ce qu'**il comporte une poutre (18) rapportée entre les deux côtés latéraux (124) de deux structures de planchers/caillebotis (12) juxtaposées latéralement, en cas d'absence de paroi latérale (11) à ce niveau,
laquelle poutre rapportée (18) est ménagée entre deux poteaux (6') des côtés avant (2) et arrière (3) pour combler l'espace entre lesdites structures de planchers/caillebotis (12).

## Patentansprüche

1. Vorrichtung zum Abschotten (1) für Tiere, insbesondere für Kälber, wobei die Vorrichtung (1) von allgemein rechteckiger Form ist und eine Vorderseite (2), eine Rückseite (3), zwei seitliche Seiten (4) und einen Boden (5) aufweist,
wobei die Vorderseite (2) mindestens zwei Pfähle (6') aufweist, von denen jeder auf zwei von deren voneinander abgewandten Seiten (61 `) Mittel aufweist, die für die Befestigung eines seitlichen Rands einer Vorderwand (8) ausgelegt sind, wobei die Vorderwand (8) einen unteren Rand (84) aufweist,
wobei die Rückseite (3) mindestens zwei Pfähle (6') aufweist, von denen jeder auf zwei von deren voneinander abgewandten Seiten (61') Mittel aufweist, die für die Befestigung eines seitlichen Rands einer Rückwand (9) ausgelegt sind, wobei die Rückwand (9) einen unteren Rand (94) aufweist,
und wobei die Pfähle (6') der Vorder- (8) und der Rückwand (9) Mittel in Form einer Einbaukehle (10') für das Befestigen eines seitlichen Rands (111, 112) einer Seitenwand (11) aufweist, um die seitlichen Seiten (4) zu bilden, wobei die Seitenwände (11) einen unteren Rand (114) aufweisen,
und wobei die Einbaukehlen (10') auf der gesamten oder praktischä der gesamten Höhe der Pfähle (6') eingerichtet sind und für eine Montage und das Festhalten der Seitenwände (11) durch einfaches Hineinschieben ausgelegt sind,
wobei die Vorrichtung zum Abschotten (1) die Möglichkeit hat, einen mindestens teilweise aus einem Boden-/Gitterrost-System gebildeten Boden (5) aufzuweisen, der eine Boden-/Gitterrost-Struktur (12) oder mehrere nebeneinander liegende Boden-/Gitterrost-Strukturen (12) aufweist, wobei jede der Boden-Gitterrost-Strukturen (12) eine Unterseite (122), eine Oberseite (121), zwei Endseiten (123) und zwei seitliche Seiten (124) aufweist,
**dadurch gekennzeichnet, daß** die Pfähle (6') mit einer durchgehenden Einbaukehle (10') versehen sind, die im oberen Teil verschlossen ist, wobei der untere Teil der Pfähle (6') einen Sockel (64') für deren Befestigung am Boden mittels Schrauben aufweist,
wobei die durchgehende Kehle (10') dazu ausgelegt ist, das Positionieren der Seitenwände (11) durch Einbau mit einem Teil jeder Seite des Pfahls (6') zu ermöglichen, um eine vordere Erweiterung (17) auf beiden Seiten der Vorderwand oder der Vorderwände (8) zu bilden,
und daß die Pfähle (6') Mittel für die Montage und das Festhalten der Vorderwand (8) und/oder der Rückwand (9) und/oder der Seitenwände (11) auf mindesten zwei Indexhöhen in der Höhe aufweisen, um zu ermöglichen:
- deren untere Positionierung mit deren unterem Rand (84, 94, 114) in der Nähe des Bodens oder mit Andruck gegen denselben, falls der Boden (5) durch den Erdboden gebildet ist, und
- deren obere Positionierung mit deren unterem Rand (84, 94, 114) in einem Abstand vom Boden oder in Höhe oder praktisch in Höhe der Oberseite (121) der den Boden (5) bildenden Boden-/Gitterrost-Struktur (12).

2. Vorrichtung zum Abschotten (1) gemäß Anspruch 1, **dadurch gekennzeichnet, daß** die Seitenwände (11) und/oder die Pfähle (6') Mittel zum Einstellen der Höhe (101', 117) aufweisen, die eine Positionierung jeder Seitenwand (11) auf mindestens zwei Indexierungshöhen in der durchgehenden Einbaukehle (10') des zugehörigen Pfahls (6') ermöglicht.

3. Vorrichtung zum Abschotten (1) gemäß Anspruch 2, **dadurch gekennzeichnet, daß** die Mittel zum Einstellen der Höhe aus Systemen von komplementären Nuten/Rippen (101', 117) bestehen, die in der durchgehenden Kehle (10') und auf des Seitenwänden ausgebildete Anschläge bilden.

4. Vorrichtung zum Abschotten (1) gemäß einem der Ansprüche 1 bis 3, **dadurch gekennzeichnet, daß** Vorder- (2) und die Rückseite (3) und/oder die Seitenwände (4) mehr als zwei identische Pfähle (6') zum lösbaren Befestigen einer Anzahl Vorder-(8) und Rückwände (9) und/oder Seitenwände (11) aufweisen.

5. Vorrichtung zum Abschotten (1) gemäß einem der Ansprüche 1 bis 4, **dadurch gekennzeichnet, daß** die Vorderwand bzw. Vorderwände (8) aus einer Torstruktur bestehen, von der ein senkrechter seitlicher Rand (82) Befestigungsmittel (821) aufweist, die mit komplementären Befestigungsmitteln (611', 612') auf einer ein Scharnier bildenden seitlichen Seite (61') eines gegenüberliegenden Pfahls (6') zusammenwirken und dazu ausgelegt sind, eine Befestigung der Vorderwand (8) auf mindestens zwei Indexierungsebenen in der Höhe ermöglicht und deren anderer seitlicher Rand (81) aktivierbare/deaktivierbare Befestigungsmittel (811) vom Typ eines Schlosses aufweist, die mit auf einer seitlichen Seite (61') des gegenüberliegenden Pfahls (6') eingerichteten komplementären Befestigungsmitteln (14) zusammenwirken, um eine lösbare Verriegelung der Vorderwand (8) auf mindestens zwei Indexierungsebenen in der Höhe zu ermöglichen.

6. Vorrichtung zum Abschotten (1) gemäß einem der Ansprüche 1 bis 5, **dadurch gekennzeichnet, daß** die Rückwand oder Rückwände (9) aus einer Struktur bestehen, deren beide senkrechte seitliche Ränder (91, 92) Befestigungsmittel (95) aufweisen, die mit auf einer seitlichen Seite (61`) eines gegenüberliegenden Pfahls (6') komplementären Befestigungsmitteln (611', 612') zusammenwirken, und die dazu ausgelegt sind, eine Befestigung der Rückwand (9) auf mindestens zwei Indexierungsebenen in der Höhe zu ermöglichen.

7. Vorrichtung zum Abschotten (1) gemäß einem der Ansprüche 1 bis 6, **dadurch gekennzeichnet, daß** die Seitenwände (11) aus einer Platte aus Plastikmaterial bestehen, die durch zwei seitliche Ränder (111, 112), einen oberen Rand (113) und den unteren Rand (114), begrenzt ist,
und daß die Materialplatte mindestens eine Klappe (115) aufweist, die auf einer Höhenebene von mehr als 80 cm vom unteren Rand (114) aus, vorzugsweise auf etwa 90 cm, liegt.

8. Vorrichtung zum Abschotten (1) gemäß einem der Ansprüche 1 bis 7, **dadurch gekennzeichnet, daß** sie einen Boden (5) aufweist, der mindestens teilweise durch ein Boden-/Gitterrost-System mit einer Boden-/Gitterrost-Struktur (12) oder mehreren nebeneinander liegenden Boden-/Gitterrost-Strukturen (12) gebildet ist, wobei jede der nebeneinander liegenden Boden-/Gitterrost-Strukturen (12) eine Unterseite (122), eine Oberseite (121), zwei Endseiten (123) und zwei seitliche Seiten (124) aufweist,
wobei der Abstand zwischen den Endseiten (123) mindestens der Entfernung zwischen den gegenüberliegenden Seiten der Pfähle (6') auf der Vorderseite (2) und der Pfähle (6') auf der Rückseite (3) entspricht,
wobei die seitlichen Seiten (124) der Boden-/Gitterrost-Struktur (12) seitliche Flügel (125) aufweist, die sich in der Ebene der Oberseite (121) erstrecken, wobei sich die seitlichen Flügel (125) entlang der Seiten der gegenüberliegenden Pfähle (6') positionieren.

9. Vorrichtung zum Abschotten (1) gemäß Anspruch 8, **dadurch gekennzeichnet, daß** sie einen Träger (18) aufweist, der im Fall der Abwesenheit der Seitenwand (11) in dieser Höhe zwischen die beiden Seitenwände (124) zweier seitlich nebeneinander liegender Boden-/Gitterrost-Strukturen (12) eingefügt ist.

## Claims

1. A partitioning device (1) for animals, in particular for calves, wherein said device (1) is generally parallelepiped in shape, comprising a front side (2), a rear side (3), two lateral sides (4) and a bottom (5),
wherein said front side (2) comprises at least two posts (6') each including, on two of their opposite sides (61'), means suitable for the fastening of a lateral edge of a front wall (8), said front wall (8) including a lower edge (84),
wherein said rear side (3) comprises at least two posts (6') each including, on two of their opposite sides (61'), means suitable for the fastening of a lateral edge of a rear wall (9), said rear wall (9) including a lower edge (94),
and wherein said posts (6') of said front (8) and rear (9) sides include means in the form of a fitting groove (10') for the fastening of a lateral edge (111, 112) of a lateral wall (11), to form said lateral sides (4), said lateral walls (11) including a lower edge (114),
and wherein said fitting grooves (10') are arranged along the whole or almost the whole height of said posts (6'), suitable for the mounting and the holding of said lateral walls (11) by simple sliding,
wherein said partitioning device (1) has the possibility to comprise a bottom (5) formed at least in part of a floor/grating system including one floor/grating structure (12) or several juxtaposed floor/grating structures (12), each of said floor/grating structures (12) including a lower face (122), an upper face (121), two end sides (123) and two lateral sides (124),
**characterized in that** said posts (6') are provided with an embedding through-groove (10'), closed at the top, the lower part of said posts (6') including a base (64') for their fastening to the ground by means of screws,
said through-groove (10') being adapted to allow the positioning of said lateral walls (11) by embedding, with a part located on each side of said post (6'), to form a front extension (17), on either side of said front wall(s) (8),
and **in that** said posts (6') include means for the mounting and the holding of said front wall (8), and/or said rear wall (9), and/or said laterals walls (11), at at least two height indexing levels, in such a way as to allow:
- the low positioning thereof, with their lower edge (84, 94, 114) near the ground, or in rest against the latter, in the case where said bottom (5) is formed by the ground, and
- the high positioning thereof, with their lower edge (84, 94, 114) remote from the ground, at or close to the level of the upper face (121) of said added floor/grating structure (12) forming said bottom (5).

2. The partitioning device (1) according to claim 1, **characterized in that** said lateral walls (11) and/or said posts (6') include height adjustment means (101', 117) allowing a positioning of each lateral wall (11) at at least two height indexation levels in the embedding through-groove (10') of the associated post (6').

3. The partitioning device (1) according to claim 2, **characterized in that** said height adjustment means consist of complementary groove(s)/rib(s) systems (101', 117), forming stops, arranged in said through-groove (10') and on said lateral walls (11).

4. The partitioning device (1) according to any one of claims 1 to 3, **characterized in that** said front (2) and rear (3) sides, and/or said lateral sides (4), include more than two identical posts (6') for the detachable fastening of a plurality of front (8) and rear (9) walls and/or lateral walls (11).

5. The partitioning device (1) according to any one of claims 1 to 4, **characterized in that** said front wall(s) (8) consist of a gate structure, a vertical lateral edge (82) of which includes fastening means (821) cooperating with complementary fastening means (611', 612') arranged on a lateral side (61') of a facing post (6'), forming a hinge, adapted to allow a fastening of said front wall (8) at at least two height indexing levels, and the other vertical lateral edge (81) of which includes lock-type fastening means (811) that can be activated / deactivated, cooperating with complementary fastening means (14) arranged on a lateral side (61') of the facing post (6'), adapted to allow a removable locking of said front wall (8) over at least two height indexing levels.

6. The partitioning device (1) according to any one of claims 1 to 5, **characterized in that** said rear wall(s) (9) consist of a structure, the two vertical lateral edges (91, 92) of which include fastening means (95) cooperating with complementary fastening means (611', 612') arranged on a lateral side (61') of a facing post (6'), adapted to allow a fastening of said rear wall (9) at at least two height indexing levels.

7. The partitioning device (1) according to any one of claims 1 to 6, **characterized in that** said lateral walls (11) consist of a plastic material panel, delimited by two lateral edges (111, 112), an upper edge (113) and said lower edge (114),
and **in that** said material panel includes at least one trapdoor (115) located at a height level of more than 80 cm from said lower edge (114), preferably of the order of 90 cm.

8. The partitioning device (1) according to any one of claims 1 to 7, **characterized in that** it comprises a bottom (5) formed at least in part of a floor/grating system including one floor/grating structure (12) or several juxtaposed floor/grating structures (12), each of said floor/grating structures (12) including a lower face (122), an upper face (121), two end sides (123) and two lateral sides (124),
the distance between said end sides (123) corresponding at least to the distance between the opposite faces of the posts (6') of the front side (2) and the posts (6') of the rear side (3),
said lateral sides (124) of said floor/grating structure (12) including lateral wings (125) extending in the plane of said upper face (121), said lateral wings (125) being positioned along the sides of the facing posts (6').

9. The partitioning device (1) according to claim 8, **characterized in that** it comprises a beam (18) added between the two lateral sides (124) of two laterally juxtaposed floor/grating structures (12), in case of absence of lateral wall (11) at this level,
said added beam (18) being arranged between two posts (6') of the front (2) and rear (3) sides to fill the space between said floor/grating structures (12).
